# EUROPÄISCHE PATENTANMELDUNG

(11) **EP 1 231 415 A2**
(43) Veröffentlichungstag der Anmeldung: **14.08.2002**
(21) Anmeldenummer: 01129581.3
(22) Anmeldetag: 12.12.2001
(51) Int. Cl.: F16J 15/08

(54) **Ein- oder mehrlagige Flachdichtung**

(30) Priorität: 09.02.2001 DE 10106048
(71) Anmelder: Federal-Mogul Sealing Systems GmbH, 57562 Herdorf (DE)
(72) Erfinder: Wagner, Franz Josef, 57520 Molzhain (DE)

(57) **Zusammenfassung**

Ein- oder mehrlagige, zumindest eine Funktionslage (20) beinhaltende Flachdichtung (1), insbesondere eine Zylinderkopfdichtung, beinhaltend mindestens eine Durchgangsöffnung (2), welche von einer Sicke (4) vollständig umschlossen ist, die in Wirkverbindung mit einer Abstützeinrichtung steht, wobei die Abstützeinrichtung durch, in Umfangsrichtung der Sicke (4) gesehen, partiell vorgelagerte Abstützelemente (6) gebildet ist und die Abstützelemente (6) mit der Funktionslage (20) verbunden sind.

## Beschreibung

Die Erfindung betrifft eine ein- oder mehrlagige Flachdichtung, insbesondere eine Zylinderkopfdichtung, beinhaltend mindestens eine Durchgangsöffnung, welche von einer Sicke vollständig umschlossen ist, wobei die Sicke in einer Funktionslage der Flachdichtung angeordnet ist, die in Wirkverbindung mit einer Abstützeinrichtung steht.

Derartige Anwendungsfälle werden üblicherweise durch Zylinderkopfdichtungen bzw. Auspuffdichtungen bedient, die durch ihren speziellen Aufbau den jeweils gegebenen Betriebszuständen Rechnung tragen.

Der EP-A 0 893 630 ist eine metallische Flachdichtung zu entnehmen, die wenigstens eine Durchgangsöffnung aufweist, die von einer Sicke vollständig umschlossen ist und in welcher in derselben Dichtungslage, die die Sicke umfaßt, eine Abstützeinrichtung für die Sicke vorhanden ist. Selbige wird durch eine Aufbiegung des die Durchgangsöffnung umgebenden Dichtungsrandes in Richtung auf die Sickenwölbung mit einem Winkel von max. 90° gebildet.

Der von der Sickenwölbung umschlossene Bereich der Sicke und/oder der von Sickenflanke und Abstützeinrichtung begrenzte Bereich kann bedarfsweise mit einem verformbaren Material ganz oder teilweise ausgefüllt werden. Diese, eine umlaufende Abstützeinrichtung beinhaltende metallische Flachdichtung ist ausschließlich dort einsetzbar, wo große Abstände zwischen Durchtrittsbereichen, wie beispielsweise Zylindern, Auspuffkrümmern oder dergleichen gegeben sind.

Am Markt erhältlich sind jedoch auch Motoren mit sehr schmalen Stegen zwischen den einzelnen Zylindern ebenso wie Motoren mit großen Zylinderdurchmessern und Zylinderabständen sowie auch Schraubenabständen und konstruktionsbedingten unterschiedlichen Kontaktpressungen, die jeweils eigene Lösungen zur befriedigenden Abdichtung verlangen.

Eine metallische Flachdichtung, wie sie in der EP 0 893 630 beschrieben ist, ist für derartige Einsatzbereiche nur bedingt einsetzbar. Bei Abdichtungen mit metallischen Dichtungen stellt sich das Problem, dass es durch unterschiedlich hohe Dichtspaltöffnungen (Dichtspaltschwingungen) über den Umfang bei eingesetzten Sickendichtungen zu Dichtproblemen kommt, da die maximale Schwingweite der Sicke überschritten wird. Die Folgen sind Sickenbrüche und Unterschreitung der erforderlichen Dichtpressung.

Der Erfindung liegt die Aufgabe zugrunde, eine im gattungsbildenden Teil des ersten Patentanspruches beschriebene ein- oder mehrlagige metallische Flachdichtung, wie beispielsweise eine Zylinderkopfdichtung oder eine Auspuffdichtung, dahingehend weiterzubilden, dass selbige für unterschiedliche Anwendungsgebiete in befriedigender Weise zum Einsatz gelangen kann, ohne dass die Nachteile des Standes der Technik weiterhin gegeben sind.

Diese Aufgabe wird dadurch gelöst, dass die Abstützeinrichtung durch, in Umfangsrichtung der Sicke gesehen, partiell vorgelagerte Abstützelemente gebildet ist, wobei die Abstützelemente im Bereich der die Sicke beinhaltenden Funktionslage der Dichtung gebildet sind.

Vorteilhafte Weiterbildungen des Erfindungsgegenstandes sind den zugehörigen Unteransprüchen zu entnehmen.

Durch Aufteilung der umlaufenden Abstützeinrichtung gemäß Stand der Technik in partiell angeordnete Abstützelemente, die über einen gewissen Umfangsbereich, bezogen auf die Sicke, verlaufen und in entsprechend kritischen Bereichen positioniert werden können, wird gegenüber dem Stand der Technik eine Lösung bereitgestellt, die sowohl für dicht nebeneinander positionierte Zylinder geeignet ist, als auch Verwendung finden kann bei Motoren mit großen Zylinderdurchmessern und Zylinderabständen, bei welchen auch entsprechend große Schraubenabstände gegeben sind.

Die Abstützelemente können entweder unmittelbar aus der metallischen Funktionslage der Dichtung, z.B. durch Ab- oder Umbiegung herausgeformt sein und durch Vollsicken, Halbvollsicken, Doppelhalbsicken sowie Halbsicken gebildet werden. Selbige können dann mit der umlaufenden bzw. im wesentlichen umlaufenden Voll-, Halb- bzw. Rechtecksicke kombiniert werden, wobei die entsprechende Kombination dem Anwendungsfall vorbehalten bleibt.

Ebenfalls denkbar ist, die Abstützelemente durch separate auf der Funktionslage vorgesehene, vorzugsweise elastische Abstützelemente zu bilden.

Die Kraftaufnahme der durch die Abstützelemente gebildeten Abstützeinrichtung kann durch Sickenweite/-breite sowie -höhe ermittelt und dem jeweiligen Erfordernis angepaßt werden, wobei eine große Höhe mit geringer Weite bzw. Breite einer hohen Abstützkraft entspricht.

Wie bereits angesprochen, ist der Erfindungsgegenstand nicht nur auf ein- oder mehrlagige Zylinderkopfdichtungen beschränkt, sondern auch für alle übrigen metallischen Abdichtungen, z.B. Dichtungen für Abgasanlagen, geeignet, bei denen durch dynamischen Betrieb unterschiedlich hohe Dichtspalte auftreten (quasi statisch oder schwingend).

Bevorzugt wird der Einsatz der Erfindung jedoch für Motoren mit
- sehr schmalen Stegen zwischen den einzelnen Zylindern;
- Motoren mit zusätzlich großem Zylinderdurchmesser und Zylinderabständen sowie damit einhergehenden großen Schraubenabständen;
gesehen.

Beim anderen Anwendungsfall sind konzeptionsbedingt unterschiedliche Kontaktpressungen sowie Dichtspaltschwingweiten gegeben, so dass der Erfindungsgegenstand hier flexibel eingesetzt werden kann, um dem entsprechenden Problem gerecht zu werden.

Je nach Anwendungsfall können die partiell über vorgebbare Umfangswinkel sich erstreckenden Abstützelemente in den kritischen Bereichen positioniert werden, um den unterschiedlichen Anforderungen gerecht werden zu können.

Der Erfindungsgegenstand ist anhand eines Ausführungsbeispieles in der Zeichnung dargestellt und wird wie folgt beschrieben. Es zeigen:
- Figur 1: Teildarstellung einer Zylinderkopfdichtung für Motoren mit sehr schmalen Stegen zwischen den einzelnen Zylindern;
- Figur 2: Unterschiedliche Ausführungsformen der Abstützelemente gemäß Figur 1, Schnittlinie II-II;
- Figur 3: alternative Flachdichtung.

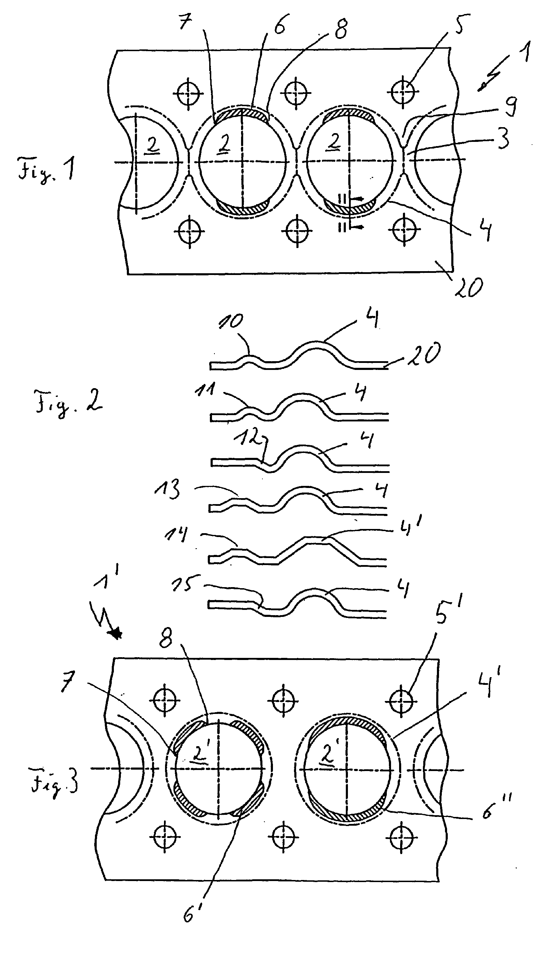

Figur 1 zeigt eine einlagige metallische Zylinderkopfdichtung 1, wie sie in einer Verbrennungskraftmaschine zum Einsatz gelangen kann. Die Zylinderkopfdichtung 1 ist entsprechend der Anzahl der Zylinder mit entsprechenden Durchgangsöffnungen 2 versehen. In diesem Beispiel sollen die hier nicht erkennbaren Zylinder relativ eng zusammenstehen, so dass eine geringe Stegbreite gegeben ist, die letztendlich sich auch im Steg 3 der Zylinderkopfdichtung 1 widerspiegelt.

Gemäß Stand der Technik sind umlaufende Sicken 4 vorgesehen (gestrichelt), die, wie Figur 1 zu entnehmen ist, bei der Dünnwandigkeit des Steges (Bereich 3) hier nicht nebeneinander umlaufend ausgebildet werden können, so dass stegseitig nur eine einfache Sicke (gestrichelt dargestellt) gegeben ist. Die Zylinderkopfdichtung 1 weist darüber hinaus mehrere Durchgangsbohrungen 5 auf, über welche sie mit dem entsprechenden Bauteil der Brennkraftmaschine verbunden wird. Um dennoch die gegebenen Betriebszustände beherrschen zu können, sind durchgangsseitig über einen gewissen Umfangswinkel außerhalb der Sicke verlaufende Abstützelemente 6 vorgesehen, die im Bereich ihrer Enden 7,8 in Richtung der Durchgangsöffnung 2 auslaufen. Die Kraftaufnahme der Abstützelemente 6 kann durch entsprechende Auswahl der Breite, Weite und Höhe auf den jeweiligen Anwendungsfall angepaßt werden. In diesem Beispiel erstrecken sich die Abstützelemente zwischen einzelnen Bohrungen 5 über einen vorgebbaren Umfangswinkel der zugehörigen Sicke 4. Die Sicken 4 laufen in den Bereichen 9 ineinander über bzw. werden als eine Sicke über den Steg 3 geführt, wobei entsprechende Übergangsradien vorgesehen sind.

Figur 2 zeigt unterschiedliche Ausgestaltungsformen partiell angeordneter Abstützelemente in Wirkverbindung mit unterschiedlich gestalteten Sickenformen. Erkennbar sind Abstützelemente 10,11,12,13,14,15 die bei einer durch eine Funktionslage 20 gebildeten einlagigen metallischen Zylinderkopfdichtung zum Einsatz gelangen können und unterschiedliche Querschnittsformen aufweisen. Die Abstützelemente 10 bis 15 können mit unterschiedlich gestalteten Sicken 4, 4' - wie in Figur 2 dargestellt - in Einklang gebracht werden, wobei die entsprechende Auswahl dem Anwendungsfall vorbehalten bleibt. Hier ist eine mehrlagige Zylinderkopfdichtung angesprochen, wobei eine Funktionslage 20 sowie eine Distanzlage (nicht dargestellt) gegeben sind.

Figur 3 zeigt eine einlagige metallische Flachdichtung 1', wie sie beispielsweise für eine Abgasanlage eingesetzt werden kann. Analog zu Figur 1 weist auch diese Flachdichtung 1' Durchgangsöffnungen 2' in entsprechender Anzahl auf. Abweichend zu Figur 1 ist die jeweilige Sicke 4' umlaufend ausgebildet, da genügend Abstand zwischen den entsprechenden Durchtrittsbereichen der Abgasanlage gegeben ist. Demzufolge sind auch die Durchgangsbohrungen 5' mit größerem Abstand zueinander vorgesehen, so dass es hier bezüglich der Abdichtung zu unterschiedlich hohen Dichtspaltöffnungen kommen kann, die unter Umständen den Wirkungsgrad negativ beeinflussen können.

Erfindungsgemäß sind in den kritischen Bereichen dieser Flachdichtung 1' partiell mehrere Abstützelemente 6',6" vorgesehen, wobei in Figur 3 zwei verschiedene Versionen Berücksichtigung gefunden haben.

## Patentansprüche

1. Ein- oder mehrlagige Flachdichtung, insbesondere eine Zylinderkopfdichtung, beinhaltend mindestens eine Durchgangsöffnung (2'), welche von einer Sicke (4,4') vollständig umschlossen ist, wobei die Sicke (4,4') in einer Funktionslage (20) der Flachdichtung angeordnet ist, die in Wirkverbindung mit einer Abstützeinrichtung steht, **dadurch gekennzeichnet, dass** die Abstützeinrichtung durch, in Umfangsrichtung der Sicke (4,4') gesehen, partiell vorgelagerte Abstützelemente (6,6',6",10,11,12,13,14,15) gebildet ist, wobei die Abstützelemente (6,6',6",10,11,12,13,14,15) sich unmmitelbar am Rand der Durchgangsöffnung (2,2') erstrecken und mit der Funktionslage (20) verbunden sind.

2. Dichtung nach Anspruch 1, **dadurch gekennzeichnet, dass** die Abstützelemente (18) durch federelastische Materialien (18) gebildet sind.

3. Dichtung nach Anspruch 1, **dadurch gekennzeichnet, dass** die Abstützelemente (10 bis 15) durch partielle Auf- oder Umbiegung des die jeweilige Durchgangsöffnung (2,2') umgebenden Rand der Funktionslage (20) gebildet sind.

4. Dichtung nach einem der Ansprüche 1 bis 3, **dadurch gekennzeichnet, dass** sich die Abstützelemente (6,6',6",10,11,12,13,14,15) über einen vorgebbaren Umfangswinkel, bezogen auf die zugehörige Sicke (4,4'), erstrecken.

5. Dichtung nach einem der Ansprüche 1 bis 4, **dadurch gekennzeichnet, dass** sich die Abstützelemente (6,6',6",10,11,12,13,14,15) jeweils zwischen den Bohrungen (5,5') für Befestigungsmittel erstrecken.

6. Dichtung nach einem der Ansprüche 1 bis 5, **dadurch gekennzeichnet, dass** die Abstützelemente (10 bis 15) als Voll- oder Halbsicken ausgebildet sind.

7. Dichtung nach einem der Ansprüche 1 bis 6, **dadurch gekennzeichnet, dass** die einzelnen Abstützelemente (6,6',6",10,11,12,13,14,15,16,17,18) in ihren Endbereichen (7,8) in Richtung der Durchgangsöffnung (2, 2') auslaufen.
